# EUROPÄISCHE PATENTSCHRIFT

(11) **EP 3 724 681 B1**
(45) Veröffentlichungstag und Bekanntmachung des Hinweises auf die Patenterteilung: **22.05.2024**
(21) Anmeldenummer: 18804315.2
(22) Anmeldetag: 16.11.2018
(51) Int. Cl.: G01S 17/10, G01S 7/481

(54) **LIDAR MESSSYSTEM**
LIDAR MEASURING SYSTEM
SYSTÈME DE MESURE LIDAR

(30) Priorität: 15.12.2017 DE 102017222970
(43) Veröffentlichungstag der Anmeldung: 21.10.2020
(73) Patentinhaber: MicroVision, Inc., Redmond, WA 98052 (US)
(72) Erfinder: BEUSCHEL, Ralf, 88239 Wangen (DE); KIESEL, Rainer, 89129 Stetzingen (DE)
(74) Vertreter: RGTH
(86) Internationale Anmeldenummer: PCT/EP2018/081598
(87) Internationale Veröffentlichungsnummer: WO 2019/115151

(56) Entgegenhaltungen:
- EP-A1- 3 168 641
- WO-A1-2011/029645
- WO-A1-2013/032954
- JP-A- S 646 716
- US-A1- 2010 051 836

## Beschreibung

Die Erfindung betrifft ein LIDAR Messsystem mit einer LIDAR Empfangseinheit.

Aus der WO 2017 081 294 ist ein LIDAR Messsystem bekannt. Dieses LIDAR-Messsystem weist unter anderem eine Sendeeinheit, eine Sendeoptik, eine Empfangsoptik sowie eine Empfangseinheit auf. Dabei wird von einem oder mehreren Emitterelementen der Sendeeinheit ein Laserlicht emittiert, welches über die Senderoptik in verschiedene Raumrichtungen gestreut wird. Das Laserlicht wird dann an einem Objekt reflektiert und über die Empfangsoptik zur Empfangseinheit geleitet. Das eintreffende reflektierte Laserlicht wird von Sensorelementen detektiert. Vorteil dieses Systems ist, dass dieses kompakt gebaut werden kann und statisch ist, also keine beweglichen Verstellelemente für die Emitterelemente und die Sensorelemente benötigt.

Es ist Aufgabe ein derartiges LIDAR Messsystem, insbesondere dessen LIDAR Empfangseinheit, weiterzuentwickeln, sodass ein eintreffendes Laserlicht möglichst optimal detektiert werden kann.

Diese Aufgabe wird gelöst durch ein LIDAR Messsystem gemäß dem Patentanspruch 1. Die nachfolgenden abhängigen Patentansprüche bilden vorteilhafte Ausführungsvarianten aus.

Das LIDAR Messsystem ist in dessen grundsätzlichem Aufbau gemäß den Ausführungen zum Stand der Technik ausgebildet. Das LIDAR Messsystem umfasst eine LIDAR Sendeeinheit sowie eine LIDAR Empfangseinheit. Des Weiteren sind das LIDAR Messsystem und dessen Komponenten sind vorzugsweise zur statischen, also unbeweglichen Anordnung an einem Kraftfahrzeug ausgebildet. Dies bedeutet, dass das LIDAR Messsystem und dessen Komponenten über keine aktiven Bewegungs- oder Verstellmechanismen, beispielsweise Elektromotoren, für den Messvorgang verfügen.

Die LIDAR Empfangseinheit und / oder die LIDAR Sendeeinheit sind günstiger Weise in einer Focal Plane-Array Konfiguration ausgebildet. Die Elemente der jeweiligen Einheit sind im Wesentlichen in einer Ebene, günstiger Weise auf einem Chip, angeordnet. Die jeweilige Einheit ist an dem LIDAR Messsystem vorzugsweise in einem Brennpunkt einer entsprechenden Optik, Sendeoptik, oder Empfangsoptik, angeordnet. Insbesondere sind die Sensorelemente bzw. die Emitterelemente im Brennpunkt der Empfangsoptik angeordnet. Eine solche Optik kann beispielsweise durch ein optisches Linsensystem ausgebildet sein.

Die LIDAR Empfangseinheit weist mehrere Sensorelemente auf, welche vorzugsweise als SPAD, Single Photon Avalanche Diode, ausgebildet sind. Die LIDAR Sendeeinheit weist mehrere Emitterelemente zur Aussendung von Laserlicht, günstigerweise Laserpulsen, auf. Die Emitterelemente sind günstiger Weise VCSEL, Vertical Cavity surface emitting laser, ausgebildet.

Die LIDAR Empfangseinheit und die LIDAR Sendeeinheit sind an dem LIDAR Messsystem günstiger Weise nebeneinander angeordnet. Nebeneinander impliziert dabei die benachbarte Anordnung von LIDAR Empfangseinheit und LIDAR Sendeeinheit, also auch übereinander oder diagonal benachbart. Die Sensorelemente und die Emitterelemente sind mit Vorteil auf einer gemeinsamen Ebene angeordnet. Deren jeweilige Chips sind also günstigerweise so zueinander angeordnet, sodass die Sensorelemente und die Emitterelemente auf der selben Ebene liegen. Auch einen Parallele Anordnung mit einem entsprechenden Versatz in Normalrichtung ist möglich.

Die LIDAR Sendeeinheit weist eine Vielzahl an Emitterelementen auf, deren ausgestrahltes Laserlicht über eine Sendeoptik in verschiedene Raumwinkel ausgestrahlt wird. Dies bedeutet, dass jedem Emitterelement ein bestimmter Raumwinkel zugeordnet ist. Die Anordnung der Sensorelemente der LIDAR Empfangseinheit und dessen Empfangsoptik ist vergleichbar, sodass die Empfangsoptik einen bestimmten Raumwinkel auf eine bestimmte Fläche der LIDAR Empfangseinheit abbildet.

Mit anderen Worten bildet ein emittiertes Laserlicht eines Emitterelements über die Emitteroptik auf ein Objekt im Fernfeld, über die Empfangsoptik immer auf denselben Bereich an der LIDAR Empfangseinheit ab. In diesem Bereich, in dem Laserlicht zu erwarten ist, sind vorzugsweise mehrere Sensorelemente angeordnet, die gemeinsam eine Makrozelle bilden. Das Emitterelement und eine solche Makrozelle sind einander zugewiesen.

Da eine VCSEL zumeist größer ist als eine SPAD und somit dessen Laserlicht eine Mehrzahl an Sensorelementen beleuchten kann, ist es auch von Vorteil eine Vielzahl an Sensorelementen in Makrozellen auszubilden. Eine solche Makrozelle kann beispielsweise definiert werden über die Fläche auf die das Emitterelement theoretisch oder auch praktisch nach Reflektion an einem Objekt abbilden kann. Diese Fläche wird im Weiteren Abbildungsfläche genannt werden, wobei die tatsächlich von dem Laserlicht beleuchtete Fläche, die kleiner ist als die Abbildungsfläche, Lichtfläche genannt wird. Das eintreffende Laserlicht kann aufgrund verschiedener Effekte, beispielsweise optischer Abbildungsfehler der Sende- und Empfangsoptik, einer Dejustage oder auch einer Frontscheibe eine Ablenkung erfahren. Die Laserfläche bildet somit auf einen Bereich innerhalb der Abbildungsfläche ab. Die Abbildungsfläche ist zumeist um ein vielfaches größer als die Lichtfläche.

Die Sensorelemente decken somit günstiger Weise zumindest die Abbildungsfläche ab, wobei im Betrieb lediglich ein Teil der Sensorelemente tatsächlich von Laserlicht beleuchtet wird. Die Sensorelemente sind bevorzugt einzeln oder in Gruppen aktivierbar bzw. deaktivierbar. Nicht beleuchtete Sensorelemente werden günstigerweise deaktiviert, um eine Detektion der Umgebungsstrahlung zu verringern.

Zumeist ist an dem LIDAR Messsystem auch eine Elektronik zur Auswertung des detektierten Laserlichts ausgebildet. Diese Elektronik wird allerdings hier nicht weiter beschrieben. Beispielhaft können mehrere Sensorelemente, insbesondere alle Sensorelemente einer Makrozelle, durch ein Ausleseelement der Auswerteelektronik ausgelesen werden, sodass eine hardwareseitige Definition einer Makrozelle vorliegen kann. Beispielhaft ist ein Ausleseelement für eine Zeile von Makrozellen vorgesehen.

Optiken oder auch optische Linsensysteme haben den Effekt, dass eintreffendes Licht in benachbarten Bereichen im Wesentlichen dieselbe Abbildung, inklusive etwaiger Abbildungsfehler, erfährt. Dies bedeutet, dass das eintreffende Laserlicht innerhalb der Abbildungsfläche bei benachbarten Makrozellen und bei einem statischen Abbildungsfehler im Wesentlichen dieselbe Ablenkung erfährt. Die Ablenkung des Laserlichts bei benachbarten Makrozellen ist also miteinander korreliert.

Von daher wird eine Konfiguration für die Sensorelemente vorgeschlagen, die unabhängig von einem etwaigen Abbildungsfehler im statistischen Mittel immer eine gleichmäßige Ausleuchtung der Sensorelemente benachbarter Makrozellen ermöglicht. Die Sensorelemente und die Emitterelemente weisen einen dekorrelierte Anordnung auf.

Beispielhaft sei eine Konfiguration aus vier Emitterelementen, sowie sechzehn zugehörigen Zeilen von Sensorelementen, wobei ein Abstand der Emitterelemente ein Vielfaches des Abstands der Zeilen der Sensorelemente entspricht, verwendet. Aufgrund der Tatsache, dass die Anzahl der Zeilen der Sensorelemente ein ganzzahliges Vielfaches der Zahl an Zeilen der Emitterelemente entspricht, bildet jedes der Emitterelemente auf dieselbe Stelle innerhalb der Abbildungsfläche der Makrozelle ab. Demnach die Sensorelemente aller vier Makrozellen identisch, also optimal oder schlecht beleuchtet.

Erfindungsgemäß ist der Abstand zwischen zwei zeilenweise benachbarten Emitterelementen ungleich einem ganzzahligen Vielfachen des Abstands zweier zeilenweise benachbarter Sensorelemente. Dadurch wird ein dekorreliertes LIDAR Messsystem bereitgestellt. Hierdurch wird sichergestellt, dass für den Fall, in dem ein Emitterelement in einen schlechten Bereich der Makrozelle abbildet, die benachbarten Emitterelemente in deren Makrozellen in andere vorteilhaftere Bereiche abbilden. Dies führt dazu, dass einzelne Makrozellen zwar schlecht beleuchtet sind, die benachbarten jedoch wesentlich besser, sodass im statistischen Mittel eine gute Beleuchtung erreicht wird. Dadurch ist eine gute Detektion durch das LIDAR Messsystem gewährleistet. Ein solches Verhältnis kann beispielsweise ferner in mehreren Dimensionen verwirklicht sein. Beispielhaft in Spalten- und in Zeilenrichtung.

Benachbarte Sensorelemente weisen ebenso einen Abstand zueinander auf, der in Abhängigkeit von der Anordnung bzw. der dekorrelierten Anordnung zwischen Emitterelementen und Sensorelementen variiert. Ein Abstand benachbarter Sensorelemente kann in Spaltenrichtung und in Zeilenrichtung unterschiedlich sein. Mit Vorteil ist der Abstand zwischen benachbarten Sensorelementen in alle Richtungen gleich groß. In einer anderen bevorzugten Ausgestaltungsvariante ist der Abstand benachbarter Sensorelemente in Zeilenrichtung kleiner als in Spaltenrichtung. Die Zeilenrichtung weist günstigerweise von dem LIDAR Sendeeinheit zu der LIDAR Empfangseinheit.

In einer vorteilhaften Ausführungsvariante wird vorgeschlagen, dass die Emitterelemente und die Makrozellen jeweils für sich in einer Zeilen-Spalten-Anordnung angeordnet sind und wobei die Sensorelemente ebenfalls in einer Art Zeilen-Spalten-Anordnung angeordnet sind.

Dies entspricht im Wesentlichen der bereits erläuterten Aufteilung von Makrozellen und Emitterelementen, welche über die jeweilige Optik einen entsprechenden Raumwinkel ausgeleuchtet bzw. diesen betrachten. Mit anderen Worten ist die Anordnung der Makrozellen und der Emitterelemente an derer jeweiligen Einheit identisch zueinander. Die Anordnung der Sensorelemente in derselben oder einer ähnlichen Art von Zeilen-Spalten-Anordnung ist dabei besonders vorteilhaft. Die möglichen Arten von Zeilen-Spalten-Anordnungen sind im weiteren noch ausführlicher erläutert.

Mit Vorteil ist der Abstand zweier benachbarter Emitterelemente, insbesondere zeilenweise benachbart, ungleich einem ganzzahligen Vielfachen des Abstands zweier benachbarter Zeilen von Sensorelementen.

Es wird zudem ein LIDAR Messsystem gemäß dem Patentanspruch 3 vorgeschlagen, welches ebenfalls die eingangs formulierte Aufgabe löst. Die abhängigen Patentansprüche bilden vorteilhafte Ausgestaltungsvarianten aus.

Die vorherigen Ausführungen zu den Patentansprüchen 1 und 2 sind auf dieses LIDAR Messsystem identisch anwendbar.

Hierbei ist die gemeinsame Anzahl der Zeilen der Sensorelemente mehrerer benachbarter Makrozellen ungleich dem ganzzahligen Vielfachen der zugehörigen Emitterelemente. Dies bedeutet, dass zumindest zwei Emitterelemente und deren zugehörige Makrozellen betrachtet werden. Die Makrozellen weisen mehrere Sensorelemente auf, die in mehreren Zeilen angeordnet sind. Mit Vorteil sind die Sensorelemente neben der Anordnung in Zeilen auch in Spalten angeordnet, wobei pro Zeile zwei, drei, vier oder mehrere Sensorelemente angeordnet sind.

Die Anzahl aller Zeilen dieser Makroelemente ist hierbei ungleich einem ganzzahligen Vielfachen der Zeilen der Makroelemente. Durch eine derartige Anordnung kann eine entsprechende identische Wiederholung, also eine Abbildung zweier benachbarter Emitterelemente auf die zugehörigen Makrozellen mit deren Sensorelementen auf eine identische schlechte Position, wie oben beschrieben, vermieden werden. Beispielhaft werden vier Emitterelemente mit deren Makrozellen herangezogen, wobei die Anzahl der Zeilen der Sensorelemente der Makrozellen den Wert achtzehn beträgt. Hierdurch wiederholt sich eine Abbildung eines Emitterelements auf eine Makrozelle ab der vierten Makrozelle identisch, vorausgesetzt es wird von einer theoretisch perfekten Abbildung ausgegangen oder die Optiken bilden in räumlich benachbarten Makrozellen mit denselben optischen Fehlern ab. Sofern ein Emitterelement an eine schlechte Stelle an der Makrozelle abbildet, bilden zumindest die anderen drei Emitterelemente auf eine andere, bessere Stelle an der Makrozelle ab.

Zudem wird ein weiteres LIDAR Messsystem gemäß dem Patentanspruch 4 vorgeschlagen. Die abhängigen Ansprüche stellen vorteilhafte Ausführungsvarianten des LIDAR Messsystems dar.

Die vorherigen Ausführungen zu den Patentansprüchen 1, 2 und 3 sind auf dieses LIDAR Messsystem identisch anwendbar. Die verschiedenen LIDAR Messsystem weisen entsprechend viele technische und merkmalsbezogene Überschneidungen auf.

Bei einer Zeilenanzahl von N Emitterelementen und den zugehörigen N Makrozellen, ist die Zeilenanzahl der Sensorelemente der N Makrozellen bestimmt durch (*m* · *N*) + *k*, wobei M eine ganze Zahl ist und k eine ganze Zahl zwischen 1 und N - 1. Die Zahl M sowie die Zahl k sind frei wählbar.

Im Weiteren werden vorteilhafte Ausführungsvarianten des LIDAR Messsystems erläutert.

Mit besonderem Vorteil kann ein Abstand, beispielsweise in Form von einer oder mehrere Leerzeilen an Sensorelementen zwischen zwei Makrozellen ausgebildet sein. Diese können ggf. bei einer zellenweise bzw. nach den oben beschriebenen Varianten mitgezählt werden oder nicht mitgezählt werden. Eine entsprechende Leerzeile kann breiter oder schmäler sein, als eine Zeile, die Sensorelemente aufweist. Das Bedeutet, dass die Breite der Leerzeile größer oder kleiner als der Abstand zweier benachbarter Sensorelemente ausgebildet sein kann.

Es wird weiter vorgeschlagen, dass benachbarte Sensorelemente ungerader Ordnung einen Versatz und benachbarte Sensorelemente gerader Ordnung keinen Versatz aufweisen.

Ein Element, also Sensorelement oder Emitterelement, hat einen direkten Nachbarn, der der Nachbar erster Ordnung ist. Das auf diesen Nachbarn folgende Element entspricht dem Nachbarn zweiter Ordnung, woraufhin das darauf folgende Element dem Nachbar dritter Ordnung, usw. entspricht. Die Nachbarschaft bezieht sich dabei günstiger Weise auf die zeilenweise Benachbarung oder die spaltenweise Benachbarung. Mit anderen Worten bedeutet dies, dass ein Sensorelement zu dessen Nachbar einen Versatz aufweist, wobei zu dem darauffolgenden Sensorelement der Versatz wieder zurückgenommen wird. In Zeilenrichtung benachbarte Elemente sind günstigerweise Spaltenrichtung versetzt, wobei in Spaltenrichtung benachbarter Elemente vorzugsweise in Zeilenrichtung zueinander versetzt sind.

In einer alternativen Variante wird der Versatz Zeile für Zeile oder Spalte für Spalte hinzuaddiert. Zudem kann der Wert des Versatzes von Zeile zu Zeile oder von Spalte zu Spalte variieren. Die Zeilen- und Spaltenform ermöglicht somit nicht nur ein rechteckförmiges Muster, sondern auch andere Musterformen, wie beispielsweise eine Rautenform oder eine Hexagonalform.

Mit Vorteil weisen in Spaltenrichtung benachbarte Sensorelemente einen in Zeilenrichtung weisenden Versatz auf.

Mit besonderem Vorteil weisen in Zeilenrichtung benachbarte Sensorelemente einen Versatz in Spaltenrichtung auf.

Durch einen derartigen Versatz benachbarter Sensorelemente in orthogonaler Richtung, wird eine verbesserte Abdeckung auf dem Chip erreicht. Insbesondere wird hierbei mit hexagonalförmigen Sensorelementen eine besonders hohe Detektorfläche pro Chipfläche erreicht.

Vorteilhafte Werte für einen Versatz sind beispielsweise 1/3 oder 1/2 des Abstandes zwischen den Sensorelementen.

In einer vorteilhaften Ausführungsvariante sind die Sensorelemente kreisförmig, quadratisch oder hexagonal ausgebildet.

Eine kreisförmige sowie quadratische Ausbildung der Sensorelemente ist insbesondere für SPAD herstellungstechnisch von Vorteil. Demgegenüber erreicht man durch Verwendung hexagonaler Sensorelemente eine verhältnismäßig große Detektorfläche. Mit Vorteil sind die Sensorelemente, insbesondere SPADS, an den Ecken abgerundet.

Mit besonderem Vorteil weisen die Spalten Emitterelemente der LIDAR Sendeeinheit und die Spalten der Sensorelemente der LIDAR Empfangseinheit einen Winkel α zueinander auf oder sind parallel zueinander ausgebildet.

Bei paralleler Anordnung ist es bereits möglich die Emitterelemente und die Sensorelemente über den Abstand der Sensorelemente voneinander zu dekorrelieren. Die Rotation der Spalten bzw. der Zeilen um einen Winkel α ermöglicht es eine weitere Komponente der Dekorrelation einzubringen. Alternativ kann der Winkel auch anhand der Zeilen von Sensorelementen und Emitterelementen festgelegt sein.

Der Winkel α rotiert dabei um eine Flächennormale auf die Focal Plane-Array der Einheiten. Günstigerweise werden die Ebenen der Focal Plane-Arrays von LIDAR Sendeeinheit und LIDAR Empfangseinheit dadurch nicht gegeneinander verkippt. Die Emitterelemente und die Sensorelemente liegen somit weiterhin auf derselben Ebene oder auf zwei zueinander parallelen Ebenen.

Mit Vorteil liegt der Winkel α zwischen 0 und 45 Grad, vorzugsweise zwischen 2 Grad und 10 Grad.

In diesen Bereichen ist eine besonders vorteilhafte Dekorrelierung möglich, um eine optimale Beleuchtung der Sensorelemente bereitzustellen.

Im Weiteren werden das LIDAR Messsystem anhand mehrerer Figuren beispielhaft weiter erläutert. Es zeigen:
- Fig. 1: eine schematische Darstellung eines LIDAR Messsystems;
- Fig. 2: eine ausschnittsweise Darstellung einer LIDAR Empfangseinheit und einer LIDAR Sendeeinheit;
- Fig. 3: Darstellung verschiedener Abbildungsmöglichkeiten bei einem korrelierten LIDAR Messsystem;
- Fig. 4: erste Variante eines dekorrelierten LIDAR Messsystems;
- Fig. 5: zweite Variante eines dekorrelierten LIDAR Messsystems;
- Fig. 6: Abbildungsmöglichkeiten des dekorrelierten LIDAR Messsystems gemäß Fig. 5;
- Fig. 7: dritte Variante eines dekorrelierten LIDAR Messsystems;
- Fig. 8: vierte Variante eines dekorrelierten LIDAR Messsystems.

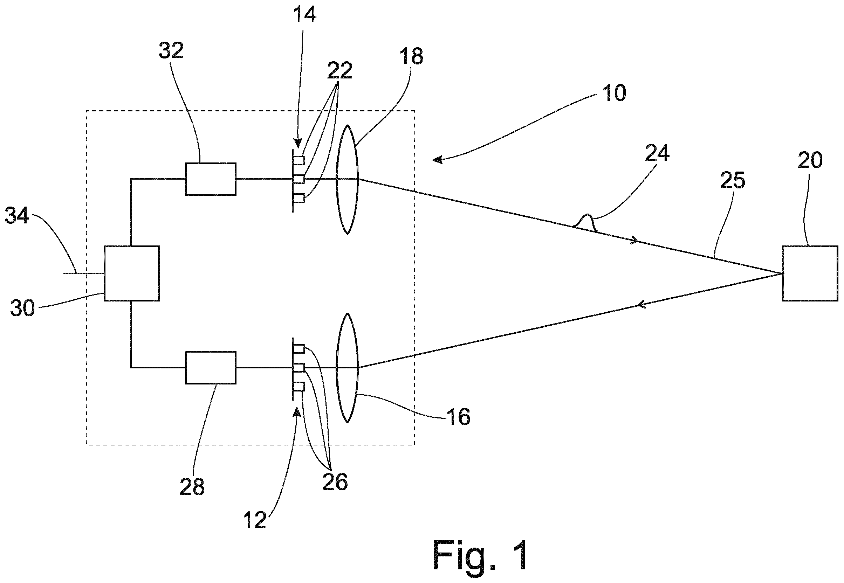

In der Fig. 1 ist ein LIDAR Messsystem 10 mit einer LIDAR Empfangseinheit 12 und einer LIDAR-Sendeeinheit 14 dargestellt. Dabei umfasst das LIDAR Messsystem 10 zudem eine Empfangsoptik 16 sowie eine Senderoptik 18. Dieses LIDAR Messsystem 10 ist zur statischen Montage an einem Kraftfahrzeug vorgesehen, um eine Umgebung zu überwachen und dabei den Abstand und die Bewegung eines Objekts 20 zu dem Kraftfahrzeug zu ermitteln. Ein solches Messsystem kann beispielsweise für autonomes Fahren verwendet werden. Das Funktionsprinzip ist wie folgt.

Die LIDAR Sendeeinheit 14 weist Emitterelemente 22 auf, wobei diese Emitterelemente 22 Laserlicht in Form von Lichtpulse emittieren. Diese Emitterelemente 22 können beispielsweise durch einen bzw. mehrere Vertical Cavity surface emitting laser, in Kurzform VCSEL, ausgebildet sein. Ein von einem Emitterelement 22 ausgesendeter Puls 24 durchläuft die Senderoptik 18, wird an einem Objekt 20 reflektiert und über eine Empfangsoptik 16 auf eines von mehreren Sensorelementen 26 geleitet wird. Ein solches Sensorelement kann beispielsweise durch eine Single Photon Avalanche Diode, auch SPAD genannt, ausgebildet sein.

In der Fig. 1 ist zur einfachen Darstellung nur ein Strahl 25 dargestellt, der den Verlauf des Pulses 24 verdeutlichen soll. Mit Hilfe der Optiken 16 und 18 und der Vielzahl an Emitterelementen 22 und Sensorelementen 26 kann durch das Messsystem 10 ein Raum auf Objekte abgetastet werden. Durch die entsprechenden Optiken 16 und 18 ist letztlich jedem Emitterelement 22 und jedem Sensorelement 26 ein bestimmter Raumwinkel zugeordnet. Ein von einem Sensorelement 26 detektierter Lichtpuls 24 wird von einem Ausleseelement 28 ausgelesen und an eine Auswerteeinheit 30 weitergegeben, welche unter anderem ein Speicherelement aufweist. Dabei wird zur Bestimmung des Abstands des Objekts 20 von dem Kraftfahrzeug das Time of Flight Prinzip, auch TOF genannt, angewendet. Der ausgesendete Puls wird mit der verstrichenen Zeit des bis zum Eintreffen an der Empfangseinheit 12 verknüpft, woraus die Laufstrecke des Lichtpulses 24 ermittelt werden kann. Eine entsprechende Koordination der ablaufenden Prozesse ist durch die Steuereinheit 32 realisiert. Das Ausleseelement in dieser Ausführungsvariante ist durch einen Time to Digital Converter, TDC, ausgebildet, der ein Speicherelement, welches ein Histogramm abbildet, befüllt. Diese Ausführungen sind jedoch sehr grundlegend und sollen nur das allgemeine Prinzip verdeutlichen. Diese Ausführungsvariante ist auf keinen Fall beschränkend für den elektronischen Aufbau des Messsystems. Um den Rahmen dieser Schrift nicht zu sprengen, können auch nicht alle Wechselwirkungen zwischen den jeweiligen Elektronikkomponenten sowie deren konkreter Aufbau dargestellt und erläutert werden. Das LIDAR-Messsystem ist mit weiteren Komponenten des Kraftfahrzeugs über eine Verbindung 34 verbunden, über die die entsprechenden Daten übermittelt werden können.

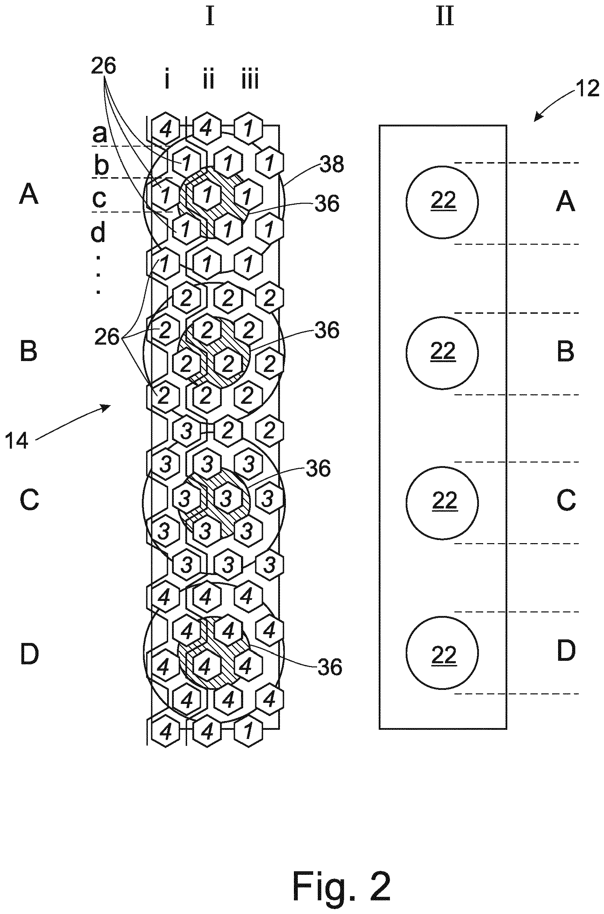

Die Fig. 2 zeigt eine ausschnittartige Draufsichtdarstellung auf die LIDAR Empfangseinheit 12 und den zugehörigen Ausschnitt der LIDAR Sendeeinheit 14. Die dargestellten Emitterelemente 22 bilden entsprechend auf den dargestellten Ausschnitt der Empfangseinheit 12 ab.

Die Empfangseinheit weist in dieser Darstellung vier Makrozellen 1,2,3,4 auf, die den vier Emitterelementen 22 zugeordnet sind. Die tatsächliche Abbildung des jeweiligen Emitterelements 22 auf die Empfangseinheit 12 ist durch einen Kreis 36 verdeutlicht. Diese stellt in der Fig. 2 die theoretische Abbildungsposition der Emitterelemente 22 auf die Empfangseinheit 12 dar, wobei hierfür vorausgesetzt wird, dass das Laserlicht 36 an einem Objekt im Unendlichen oder bei maximaler Detektionsreichweite reflektiert wird und auf die Empfangseinheit 12 trifft. Der Kreis 36 ist schraffiert dargestellt.

Jedem Emitterelement 22 sind mehrere Sensorelemente 26 zugeordnet, wobei nur ein Teil der Sensorelemente 26 mit einem Bezugszeichen versehen sind, um eine übersichtliche Darstellung zu gewährleisten. Das Emitterelement 22 ist größer als das Sensorelement 26, wodurch das Laserlicht 36 eine Mehrzahl an Sensorelementen 26 beleuchtet bzw. beleuchten kann.

Eine mögliche Abweichung des eintreffenden Laserlichts, beispielsweise aufgrund optischer Effekte oder auch sonstiger Effekte, wie Alterungseffekte ist durch einen Kreis 38 angedeutet, innerhalb dem sich das eintreffende Laserlicht 36 bewegen kann. Die Sensorelemente 26 sind einzeln aktivierbar und dementsprechend auch einzeln deaktivierbar, sodass nicht beleuchtete Sensorelemente 26 deaktiviert werden, um eine Detektion von Umgebungsstrahlung zu verringern.

Die Sensorelemente sind zu Makrozellen 1,2,3,4 zusammengefasst, wobei eine Makrozelle 1,2,3,4 und ein Emitterelement 22 einander zugeordnet sind. Diese Zuordnung wird verdeutlicht, indem in Fig. 2 jedes Sensorelement 26 mit der Zahl der entsprechenden Makrozelle 1,2,3,4 bezeichnet ist. Ein Emitterelement 22 bildet dementsprechend nur auf Sensorelemente 22 der jeweiligen Makrozelle 1,2,3,4 ab. Dem obersten Emitterelement 22 sind die Sensorelemente 26 mit der Nummer 1 zugeordnet, die die Makrozelle 1 bilden, dem darunterliegenden Emitterelement 22 sind die Sensorelemente der Makrozelle 2 zugeordnet, usw..

Die Sensorelemente weisen eine Hexagonalform auf. Mit Vorteil sind deren Ecken abgerundet. Die Anordnung der Makrozellen, der Emitterelemente und der Sensorelemente erfolgt in einer Zeilen-Spalten-Form. Die Spalten von Emitterelementen und Makrozellen sind mit römischen Ziffern in Großbuchstaben bezeichnet, die Zeilen entsprechend mit lateinischen Großbuchstaben. Die Spalten von Sensorelementen werden mit römischen Ziffern, in Kleinschrift, und die Zeilen von Sensorelementen werden mit lateinischen Buchstaben, ebenfalls in Kleinschrift, bezeichnet.

Spaltenweise benachbarte Sensorelemente weisen einen in Zeilenrichtung weisenden Versatz auf, wodurch eine Hexagonalform erreicht wird. Benachbarte Sensorelemente der ersten Ordnung und weiterer ungerader Ordnungen weisen dabei einen Versatz in Zeilenrichtung auf, wohingegen benachbarte Sensorelemente der zweiten Ordnung und weiterer gerade Ordnungen in Zeilenrichtung keinen Versatz zueinander aufweisen.

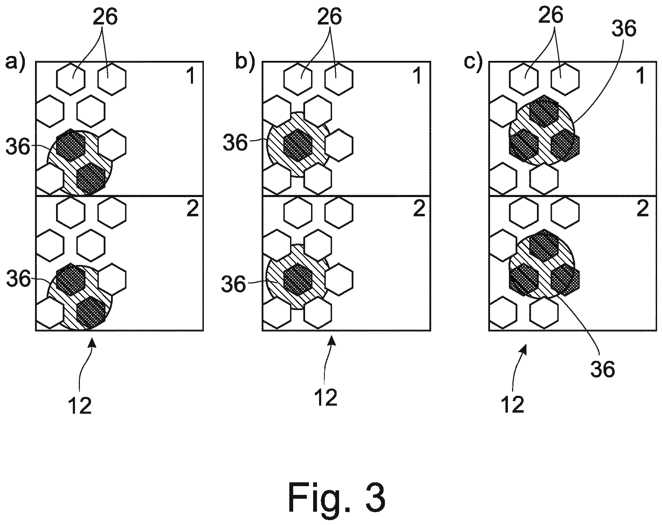

In der Fig. 3 sind mehrere Abbildungsvarianten für ein korreliertes LIDAR Messsystem gezeigt. Dieses LIDAR Messsystem umfasst beispielhaft vier Zeilen an Sensorelementen 26 pro Emitterelement oder Makrozelle. Das eintreffende Laserlicht eines Emitterelements 22 wird auch hier durch den Kreis 36 verdeutlicht. Die Sensorelemente 26 lassen sich einzeln aktivieren sowie auch deaktivieren, wobei lediglich die aktiven Sensorelemente 26 Messwerte an die Auswerteelektronik übermitteln.

Sensorelemente 26, bei denen lediglich ein kleiner Teil der Detektionsfläche beleuchtet wird, erhöhen eine detektierte Umgebungsstrahlung unverhältnismäßig stark gegenüber dem messbaren Laserlicht, der von einem Emitterelement 22 aktiv ausgegangen ist. Aktive Sensorelemente 26 sind schraffiert dargestellt, wohingegen inaktive Sensorelemente 26 als hexagonaler Rahmen gezeichnet sind.

Die Korrelation des LIDAR Messsystems 10 lässt sich anhand der Fig. 3 eindeutig erkennen. Ein Vergleich des eintreffenden Laserlicht 36 von Makrozelle 1 und von Makrozelle 2 offenbart, dass dieses an den Makrozellen identisch auf die Sensorelemente 26 abbildet. Dies gilt für die Fig. 3a, welche die theoretische Abbildungsposition der LIDAR Sendeeinheit 14 auf die LIDA Empfangseinheit 12 darstellt, für die Fig. 3b, welche die schlechtmöglichste Ablenkung des eintreffenden Laserlichts 24 darstellt so wie die Fig. 3c, welche die bestmögliche Ablenkung für das eintreffende Laserlicht zeigt.

In der Fig. 3a sind zwei Sensorelemente 26 fast vollständig beleuchtet. Üblicherweise lohnt es sich ein Sensorelement zu aktivieren, wenn dieses eine beleuchtete Fläche von über 50 Prozent aufweist. Die in der Fig. 3a nur zu einem kleinen Teil beleuchteten Sensorelemente 26 sind deshalb deaktiviert. In der Fig. 3b, dem schlechtmöglichsten Fall sind zwar sechs Sensorelemente von dem Laserlicht 24 getroffen, jedoch lediglich ein Sensorelement 26 ist ausreichend beleuchtet. Im Vergleich mit der Beleuchtung von Fig. 1 verringert sich dadurch ein Verhältnis von Messsignal zu Rauschgrund negativ. Zudem würde Aktivierung der weiteren fünf, jedoch nur zu einem kleinen Teil beleuchteten Sensorelemente 26 eine Verschlechterung des Messsignals gegenüber einem Rauschgrund bewirken.

Die bestmögliche Verschiebung des Laserlichts 24 ist in der Fig. 3c dargestellt, bei der drei Sensorelemente 26 ausreichend, also mit einer Fläche von über 50 Prozent beleuchtet sind. Die Fig. 3a bis 3c verdeutlichen entsprechende Ablenkungen des Laserlichts 36, die beispielsweise durch optische Abbildungsfehler verursacht werden.

Bei dem beschriebenen korrelierten LIDAR Messsystem führt eine entsprechende Ablenkungen zu einer starken Verbesserung oder zu einer starken Verschlechterung des Detektionsvermögens. Auch aufgrund der Streuung im Herstellungsprozess und aus wirtschaftlichen Gründen ist letzteres zu vermeiden.

Grund für derartig gleichmäßige Verschiebung ist unter anderem, dass Optiken, also bei der Empfangsoptik 16 und bei der Sendeoptik 18, übliche Produktionsungenauigkeiten auftreten können die eine geringe Ablenkung des ausgehenden bzw. des eintreffenden Laserlichts bewirken. Derartige Abbildungsfehler sind für bestimmte Bereiche der Optiken im Wesentlichen identisch oder für bestimmte Bereiche zumindest miteinander korreliert. Aufgrund des geringen Abstands der Sensorelemente zueinander sind optische Abbildungsfehler für diese nah beieinanderliegenden Sensorelemente miteinander korreliert sind. Dies bedeutet, dass eine Verschiebung aufgrund eines optischen Abbildungsfehlers das Laserlicht 36 bei benachbarten Makrozellen im Wesentlichen identisch verschiebt. Wird nun bei einem korrelierten LIDAR Messsystem ein schlechter Bereich einer Makrozelle getroffen, so ist dieser für alle Makrozellen in diesem Bereich schlecht. Ein derartiger Effekt soll durch die nachfolgenden Ausführungen zu einem dekorrelierten LIDAR Messsystem vermieden werden.

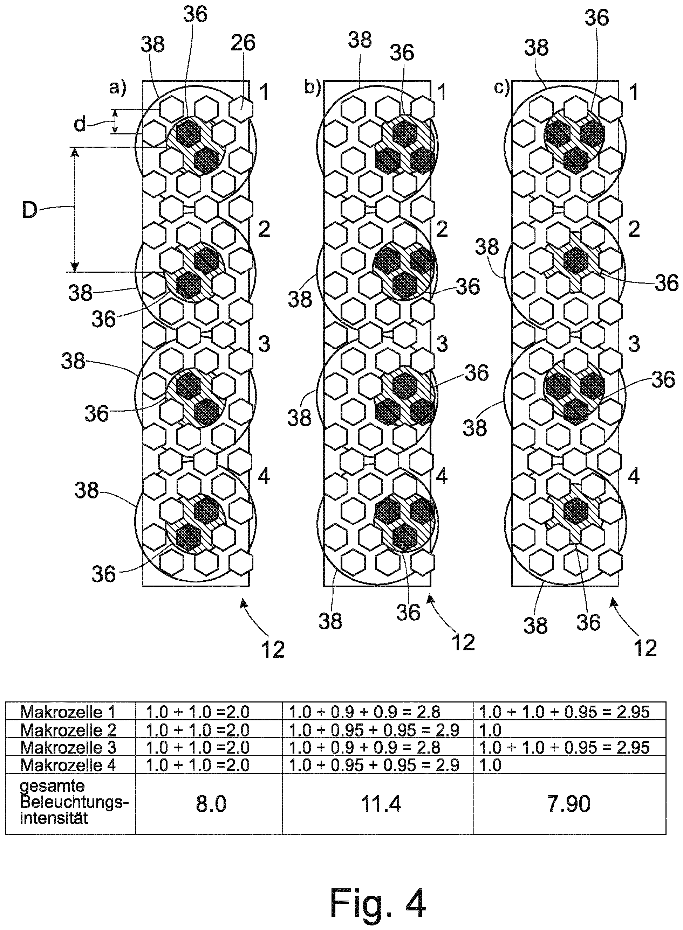

In den Fig. 4 ist ein dekorreliertes LIDAR Messsystem 10 dargestellt. Auch hier ist für das LIDAR Messsystem 10 lediglich ausschnittsweise eine LIDAR Empfangseinheit 12 mit vier Makrozellen 1,2,3,4 dargestellt, die vier Emitterelementen 22 zugeordnet sind. Für die Emitterelemente 22 ist stellvertretend das eintreffende Laserlicht 36 dargestellt, sowie der Kreis 38, der die möglichen Grenzbereiche für das Laserlicht 36 darstellt.

Auch hier ist in der Fig. 4a die theoretische Abbildung auf die LIDAR Empfangseinheit nach Reflektion des Laserlichts 36 an einem Objekt im Unendlichen oder bei maximaler Detektionsreichweite. Fig. 4b zeigt die bestmögliche Abbildung des Laserlichts 36 auf die LIDAR Empfangseinheit und die Fig. 4c die schlechtmöglichste Variante. Den Figuren ist auch jeweils eine Tabelle zugeordnet, die eine entsprechende Beleuchtung der einzelnen Makrozellen 1,2,3,4 und deren Sensorelementen 26 verdeutlicht.

Die Beleuchtung der Sensorelemente 26 ist in der Tabelle unter der jeweiligen Fig. 4a, 4b und 4c in Zahlenwerten dargestellt. Diese Zahlenwerte entsprechen dem Anteil der Fläche des Sensorelements 26, welcher von dem Laserlicht beleuchtet wird. Der Wert 1 entspricht einer Beleuchtung der gesamten Fläche, 0,5 einer beleuchteten Fläche von 50% und 0 einer beleuchteten Fläche von 0%. Wie bereits erwähnt sind nur Sensorelemente 26 aktiviert, bei denen eine Fläche von über 50% durch das Laserlicht beleuchtet ist.

Die aktiven Sensorelemente 26 sind auch hier schraffiert dargestellt, wobei für jede Makrozelle 1,2,3,4 die beleuchteten Flächen der aktiven Sensorelemente 26 zusammengerechnet sind. In der Fig. 4 ist die Anordnung der Sensorelemente 26 innerhalb des Kreises 38 benachbarter Makrozellen 1,2,3,4 unterschiedlich. Eine Ablenkung des Laserlichts 36 wirkt sich für unterschiedliche Makrozellen 1,2,3,4 unterschiedlich aus. Erkenntlich ist dies auch in Fig. 4a, bei der das Laserlicht 36 bei benachbarten Makrozellen 1,2,3,4 auf zwei verschiedene Anordnungsvarianten der Sensorelemente 26 trifft. Die Anordnung der Sensorelemente 26 wiederholt sich jede zweite Makrozelle 1,2,3,4. Die ungeradzahligen Makrozellen 1,3 und die geradzahligen Makrozellen 2,4 weisen jeweils dasselbe Beleuchtungsmuster auf.

Insbesondere sind in der Standardposition gemäß Fig. 4a jeweils zwei Sensorlemente 26 pro Makrozelle 1,2,3,4 vollständig beleuchtet, was zu einer Gesamtbeleuchtung von 8,0 führt. In der Fig. 4b, welche die bestmögliche Verschiebung des Laserlichts 36 darstellt, sind jeweils drei Sensorelemente pro Makrozelle aktiv, woraus sich eine Gesamtbeleuchtung von 11,4 ergibt. In der Fig. 4c ist die schlechtmöglichste Position für eine Beleuchtung durch die Emitterelemente 22 dargestellt. In der Makrozelle 1 und der Makrozelle 3 sind jeweils drei Sensorelemente 26 fast vollständig beleuchtet, wobei in den Makrozellen 2 und 4 lediglich ein Sensorelement 26 aktiv und zugleich beleuchtet ist. Die Gesamtbeleuchtung beträgt aber dennoch 7,9 was lediglich 0,1 unter der theoretischen Abbildung liegt. Durch die Dekorrelation ist auch bei auftretenden Ablenkungen des Laserlichts 36 jederzeit eine ausreichende Beleuchtung gewährleistet.

Die Dekorrelation des Beispiels aus Fig. 4 wird erreicht durch die Verwendung von 19 Zeilen von Sensorelementen, die 4 Makrozellen bzw. 4 Emitterelementen zugewiesen sind. Die Zahl 19 ist dabei kein Vielfaches der Zahl 4. Die Anzahl der Zeilen an Sensorelementen 26 ist ungleich einem Vielfachen der Anzahl der zugehörigen Zeilen von Emitterelementen. Ebenso ist der Abstand D benachbarter Emitterelemente 22 kein ganzzahliges Vielfaches des Abstands d zwischen zwei Zeilen von Sensorelementen 26. Die Abstände d und D sind in der Fig. 4a dargestellt. Die Variablen gemäß der Formel nach den obigen Ausführungen in der allgemeinen Beschreibung sind N=4, M=4 und K=3.

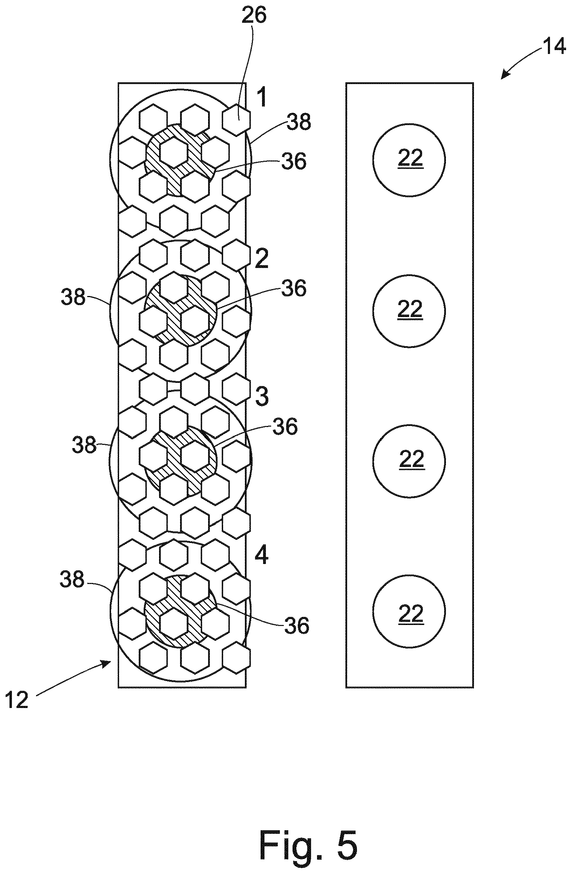

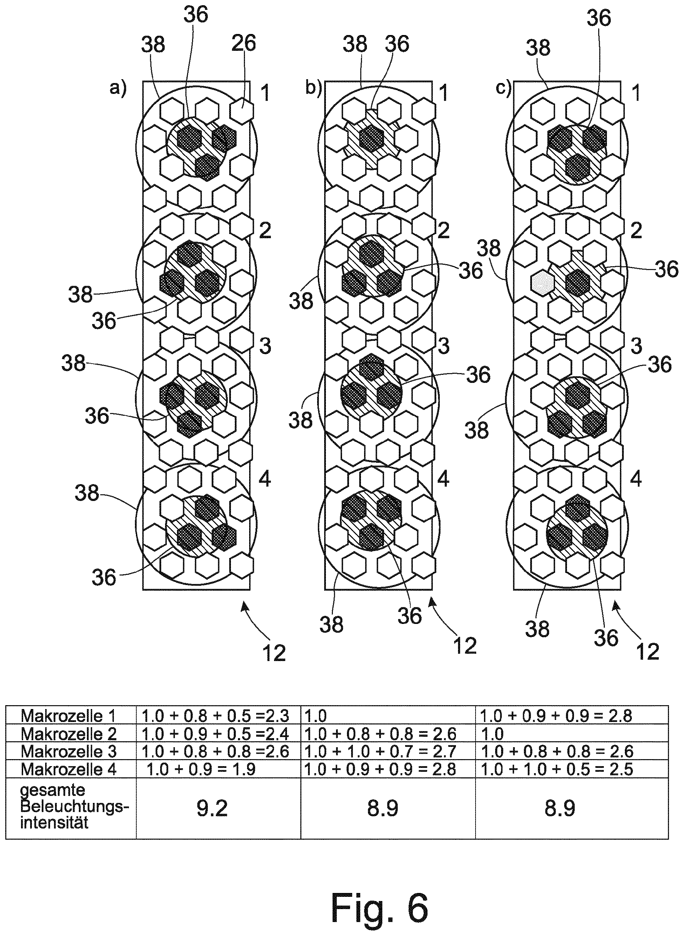

In einer weiteren Variante gemäß der Fig. 5 und 6 sind 17 Zeilen Sensorelemente 26 vier Zeilen von Emitterelementen 22 zugehörig angeordnet. Die Fig. 5 zeigt die Gegenüberstellung eines Ausschnitts der LIDAR Sendeeinheit 14 mit einem entsprechenden Ausschnitt der LIDAR Empfangseinheit 12. Auch in hier ist die Zuweisung der Makrozellen 1,2,3,4 zu den Emitterelementen 22 deutlich dargestellt.

In Weiterbildung zu der Ausführungsvariante nach Fig. 4 bildet hierbei jedes Emitterelement auf eine andere Anordnung von Sensorelementen ab. Diese Anordnungen wiederholen sich beispielhaft für jede vierte Makrozelle.

Gemäß Fig. 6a, 6b und 6c sind wieder die drei Abbildungsvarianten beschrieben. Die unterschiedlichen Zahlenwerte zur Beleuchtung jeder einzelnen der Makrozellen 1,2,3,4 und deren aktiven Sensorelementen 26 verdeutlichen nochmals die unterschiedlichen Beleuchtungsmuster.

Jede Makrozelle 1,2,3,4 erfährt eine eigene Beleuchtungsstärke. Bei theoretischem, schlechtestem und bestmöglich eintreffendem Laserlicht beträgt die Variation der gesamten Beleuchtungsstärke zwischen 8,9 und 9,2. Unabhängig von der Ablenkung des Laserlichts durch optische Abbildungsfehler führt die Beleuchtung einer Gruppe von 4 Makrozellen zu einer im Wesentlichen unveränderten Beleuchtungsintensität.

Das LIDAR Messsystem 10 ist durch die Dekorrelation entsprechend unabhängig von etwaigen Abbildungsfehlern verwendeter Optiken. Die Herstellungskosten können durch Verwendung von günstigeren Optiken bei gleichbleibender Funktionalität gesenkt werden.

Der Raumwinkel ist dadurch jederzeit ausreichend gut ausgeleuchtet, wodurch eine zuverlässige Detektion von Objekten erreicht wird. Gemäß Fig. 6 stehen 51 Sensorelemente 26 bereit, um eine optimale Beleuchtung und Detektion zu übernehmen. Sensorelemente 26, die außerhalb des theoretischen Abbildungsbereichs der Emitterelemente liegen können beispielsweise bei der Herstellung weggelassen werden. aufgrund der Herstellungsverfahren ist es jedoch von Vorteil diese einfach mit zu fertigen. Alternativ können diese SPAD auch als Apertur SPAD verwendet werden, die in einem Nahbereich aktiv sind, bei dem ein Selbstblendungseffekt auftreten kann. Eine solche Selbstblendung kann beispielsweise über eine Frontscheibe ausgelöst werden, die das emittierte Laserlicht teilweise reflektiert. Die Aperture SPAD sind entsprechend angepasst, beispielsweise durch eine Beschichtung, um durch diese Reflektion nicht oder mit geringerer Wahrscheinlichkeit ausgelöst zu werden.

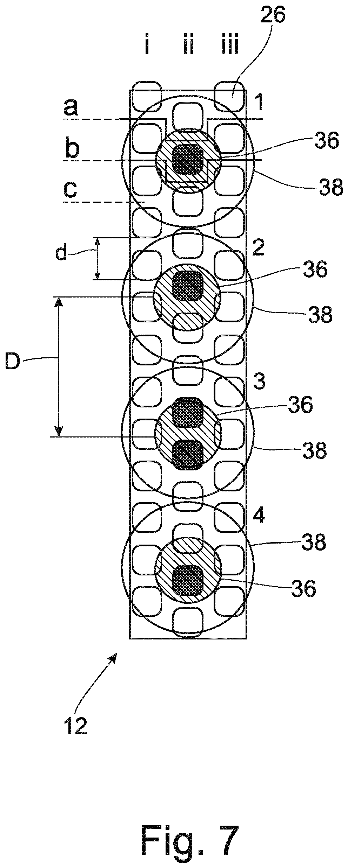

In der Fig. 7 ist eine weitere Ausführungsvariante gezeigt, welche anstelle der hexagonalen Sensorelemente im Wesentlichen quadratische Sensorelemente verwendet. Diese quadratischen Sensorelemente weisen abgerundete Ecken auf.

In diesem Beispiel sind drei Spalten i, ii, iii sowie 13 Zeilen gegenüber 4 Zeilen von Emitterelementen 22 ausgebildet. Auch dieses Verhältnis ist ungleich einem ganzzahligen Vielfachen der Anzahl an Zeilen bzw. der Anzahl der Emitterelemente 22. Auch der Abstand D der Emitterelemente ist kein ganzzahliges Vielfaches des Abstands d der Sensorelemente.

Der Abstand ist allgemein definiert über eine Distanz von einem Punkt eines Elements zu demselben Punkt des benachbarten Elements. Dieser Punkt kann beispielsweise der Mittelpunkt oder ein Rand des jeweiligen Elements sein.

In einer Zeile a, der Sensorelemente 26 der LIDAR Empfangseinheit 12 ist ein entsprechender Spaltenversatz bei in Zeilenrichtung benachbarten Sensorelementen 22 dargestellt. Die Spalte ii ist um etwa 50 Prozent nach unten, also in Spaltenrichtung oder quer zur Zeilenrichtung, verschoben. Das nachfolgend benachbarte Sensorelement 26 der Spalte iii ist gegenüber der Spalte i nicht verschoben.

Zeilenweise benachbarte Sensorelemente gerader Ordnung sind nicht gegeneinander verschoben, zeilenweise benachbarte Sensorelemente ungerader Ordnung sind zueinander in Spaltenrichtung verschoben. Die Beleuchtungsstruktur unterscheidet sich auch bei diesem dekorrelierten LIDAR-Messsystem 10 für jede Makrozelle.

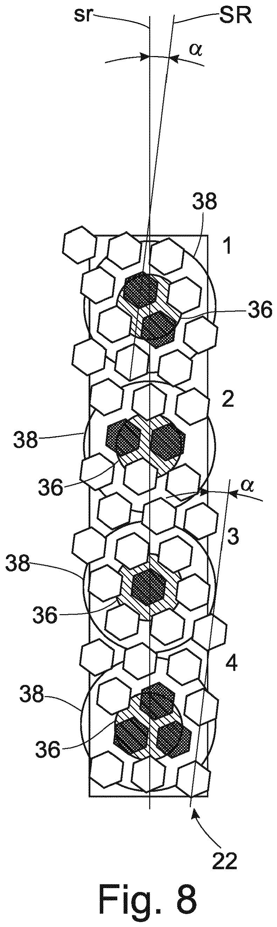

In der Fig. 8 ist eine weitere Variante für ein hexagonales Muster dargestellt. Dieses entspricht im Wesentlichen den zuvor ausgeführten hexagonalen Varianten gemäß Fig. 4 oder Fig. 5 und 6. An dem Ausschnitt der Sensoreinheit sind 15 Zeilen an Sensorelementen 26 den vier Emitterelementen 22 zugewiesen. Die Sensorelemente sind in deren hexagonaler Anordnung um einen Winkel α gedreht. Die Drehung erfolgt um eine Normale auf die Fläche des Focal-Plane Arrays. Dieser Winkel α ist beispielhaft zu 6,9 Grad gewählt. Es sind allerdings auch Winkel zwischen 0 und 45 Grad möglich, wobei der Winkel α bevorzugt zwischen 2 und 10 Grad liegt. Insbesondere weist die Spaltenrichtung sr der Makrozellen 1,2,3,4 oder der Sensorelemente 26 gegenüber der Spaltenrichtung SR der Emitterelemente 22 den Winkel α auf.

Die vorigen Ausführungen sind an einem Messsystem erläutert, welches beispielhaft eine Sendeeinheit aufweist und eine rechts von diesem angeordnete Empfangseinheit. Die Anordnung übereinander oder auch diagonal zueinander ist dadurch implizit mit umfasst und bedarf keiner gesonderten Beschreibung. Auch eine Drehung einer oder beider Einheiten ist durch die obigen Beschreibungen mit umfasst. Dies kann auch die Drehung eines Chips einer Einheit sein.

### Bezugszeichen

- 1,2,3,4: Makrozelle
- 10: LIDAR Messsystem
- 12: LIDAR Empfangseinheit
- 14: LIDAR Sendeeinheit
- 16: Empfangsoptik
- 18: Senderoptik
- 20: Objekt
- 22: Emitterelement, VCSEL
- 24: Laserlicht, Puls
- 25: Strahl
- 26: Sensorelement
- 28: Ausleseelement
- 30: Auswerteeinheit
- 32: Steuereinheit
- 34: Verbindung
- 36: Kreis, Laserlicht
- 38: Kreis, Grenze Eintreffendes Laserlicht
- I, II, III,: Spalte Makrozelle, Emitterelement
- i, ii, iii,: Spalte Sensorelement
- A, B, C: Zeile Makrozelle, Emitterelement
- a, b, c: Zeile Sensorelement
- d: Abstand
- D: Abstand
- α: Winkel
- sr: Spaltenrichtung Makrozelle, Sensorelement
- SR: Spaltenrichtung Emitterelement

## Patentansprüche

1. LIDAR Messsystem (10) mit einer LIDAR Sendeeinheit (14) und einer LIDAR Empfangseinheit (12), das in einer Focal Plane-Array Anordnung ausgebildet ist, wobei
- Die LIDAR Empfangseinheit (12) mehrere Sensorelemente (26) aufweist und wobei
- Die LIDAR Sendeeinheit (14) mehrere Emitterelemente (22) aufweist, wobei
- mehrere Sensorelemente (26) eine Makrozelle (1,2,3,4) bilden, wobei die
Makrozelle (1,2,3,4) einem einzelnen Emitterelement (22) zugeordnet ist, **dadurch gekennzeichnet, dass** der Abstand (D) zwischen zwei zeilenweise benachbarten Emitterelementen (22) ungleich einem ganzzahligen Vielfachen des Abstands (d) zweier zeilenweise benachbarter Sensorelemente (26) ist.

2. LIDAR Messsystem (10) nach Anspruch 1, **dadurch gekennzeichnet, dass**
- die Emitterelemente (22) und die Makrozellen (1,2,3,4) jeweils für sich in einer Art Zeilen-Spalten-Anordnung angeordnet sind und wobei
- die Sensorelemente (26) ebenfalls in einer Art Zeilen-Spalten-Anordnung angeordnet sind.

3. LIDAR Messsystem (10) nach Anspruch
1, **dadurch gekennzeichnet, dass**
- die Emitterelemente (22) und die Makrozellen (1,2,3,4) jeweils für sich in einer Art Zeilen-Spalten-Anordnung angeordnet sind und wobei
- die Sensorelemente (26) ebenfalls in einer Art Zeilen-Spalten-Anordnung angeordnet sind,
**dadurch gekennzeichnet, dass** die gemeinsame Anzahl der Zeilen der Sensorelemente (26) mehrerer benachbarter Makrozellen (1,2,3,4) ungleich dem ganzzahligen Vielfachen der zugehörigen Emitterelemente (22) ist.

4. LIDAR Messsystem (10) nach Z Anspruch 3, **dadurch gekennzeichnet, dass** bei einer Zeilenanzahl von N Emitterelementen (22) und den zugehörigen N Markozellen (1,2,3,4), die Zeilenanzahl der Sensorelemente (26) der N Makrozellen (1,2,3,4) bestimmt ist durch (*m* · *N*) + *k*, wobei m eine ganze Zahl ist und k eine ganze Zahl zwischen 1 und N - 1 ist.

5. LIDAR Messsystem (10) nach einem der Ansprüche 1 bis 4, **dadurch gekennzeichnet, dass** benachbarte Sensorelemente (26) ungerader Ordnung einen Versatz und benachbarte Sensorelemente (26) gerader Ordnung keinen Versatz aufweisen.

6. LIDAR Messsystem (10) nach einem der Ansprüche 1 bis 5, **dadurch gekennzeichnet, dass** spaltenweise benachbarte Sensorelemente (26) einen zeilenweisen Versatz aufweisen.

7. LIDAR Messsystem (10) nach einem der Ansprüche 1 bis 6, **dadurch gekennzeichnet, dass** in Zeilenrichtung benachbarte Sensorelemente (26) einen in Spaltenrichtung weisenden Versatz aufweisen.

8. LIDAR Messsystem (10) nach einem der Ansprüche 1 bis 7, **dadurch gekennzeichnet, dass** die Spalten Emitterelemente (22) der LIDAR Sendeeinheit (14) und die Spalten der Sensorelemente (26) der LIDAR Messeinheit (12) parallel zueinander ausgebildet sind oder einen Winkel α zueinander aufweisen.

9. LIDAR Messsystem (10) nach Anspruch 8, **dadurch gekennzeichnet, dass** der Winkel α zwischen 0° und 45°, vorzugsweise zwischen 2° und 10° liegt.

## Claims

1. LIDAR measuring system (10) with a LIDAR transmitter unit (14) and a LIDAR receiver unit (12), which is formed in a focal plane array arrangement, wherein
- the LIDAR receiver unit (12) has several sensor elements (26) and wherein
- the LIDAR transmitter unit (14) has several emitter elements (22), wherein
- several sensor elements (26) form a macrocell (1, 2, 3, 4), wherein the macrocell (1, 2, 3, 4) is assigned to a single emitter element (22),
**characterized in that** the distance (D) between two line-wise adjacent emitter elements (22) is not equal to an integer multiple of the distance (d) between two line-wise adjacent sensor elements (26).

2. LIDAR measuring system (10) according to claim 1, **characterized in that**
- the emitter elements (22) and the macrocells (1, 2, 3, 4) are each arranged separately in a kind of row-column arrangement and wherein
- the sensor elements (26) are also arranged in a kind of row-column arrangement.

3. LIDAR measuring system (10) according to claim 1, **characterized in that**
- the emitter elements (22) and the macrocells (1, 2, 3, 4) are each arranged separately in a kind of row-column arrangement and wherein
- the sensor elements (26) are also arranged in a kind of row-column arrangement,
**characterized in that** the common number of lines of the sensor elements (26) of several adjacent macrocells (1, 2, 3, 4) is not equal to the integer multiple of the associated emitter elements (22).

4. LIDAR measurement system (10) according to claim 3, **characterized in that** with a line number of N emitter elements (22) and the associated N macrocells (1, 2, 3, 4), the line number of the sensor elements (26) of the N macrocells (1, 2, 3, 4) is determined by (*m* · *N*) + *k*, where m is an integer and k is an integer between 1 and
N-1.

5. LIDAR measuring system (10) according to one of claims 1 to 4, **characterized in that** adjacent sensor elements (26) of odd order have an offset and adjacent sensor elements (26) of even order have no offset.

6. LIDAR measuring system (10) according to one of claims 1 to 5, **characterized in that** column-wise adjacent sensor elements (26) have a row-wise offset.

7. LIDAR measuring system (10) according to one of claims 1 to 6, **characterized in that** sensor elements (26) adjacent in the row direction have an offset pointing in the column direction.

8. LIDAR measuring system (10) according to one of claims 1 to 7, **characterized in that** the columns of emitter elements (22) of the LIDAR transmitter unit (14) and the columns of the sensor elements (26) of the LIDAR measuring unit (12) are formed parallel to each other or have an angle α to each other.

9. LIDAR measuring system (10) according to claim 8, **characterized in that** the angle α is between 0° and 45°, preferably between 2° and 10°.

## Revendications

1. Système de mesure LIDAR (10) avec une unité d'émission LIDAR (14) et une unité de réception LIDAR (12), qui est réalisé dans un agencement de réseau de plans focaux, dans lequel
- l'unité de réception LIDAR (12) comprend une pluralité d'éléments de détection (26), et dans lequel
- l'unité d'émission LIDAR (14) comprend une pluralité d'éléments émetteurs (22), dans laquelle
- plusieurs éléments de détection (26) forment une macrocellule (1, 2, 3, 4), la macrocellule (1, 2, 3, 4) étant associée à un seul élément émetteur (22),
**caractérisé en ce que** la distance (D) entre deux éléments émetteurs (22) voisins en ligne n'est pas égale à un multiple entier de la distance (d) de deux éléments de détection (26) voisins en ligne.

2. Système de mesure LIDAR (10) selon la revendication 1, **caractérisé en ce que**
- les éléments émetteurs (22) et les macrocellules (1, 2, 3, 4) sont disposés chacun pour soi dans une sorte de disposition en ligne-colonne et où
- les éléments de détection (26) sont également disposés selon une sorte de disposition en lignes et en colonnes.

3. Système de mesure LIDAR (10) selon la revendication 1, **caractérisé en ce que**
- les éléments émetteurs (22) et les macrocellules (1, 2, 3, 4) sont disposés chacun pour soi dans une sorte de disposition en ligne-colonne et où
- les éléments de détection (26) sont également disposés selon une sorte de disposition en lignes et en colonnes,
**caractérisé en ce que** le nombre commun de lignes des éléments de détection (26) de plusieurs macrocellules voisines (1, 2, 3, 4) n'est pas égal au multiple entier des éléments émetteurs associés (22).

4. Système de mesure LIDAR (10) selon la revendication 3, **caractérisé en ce que**, pour un nombre de lignes de N éléments émetteurs (22) et les N macrocellules (1, 2, 3, 4) correspondantes, le nombre de lignes des éléments de détection (26) des N macrocellules (1, 2, 3, 4) est déterminé par (*m* · *N*) + *k* où m est un nombre entier et k est un nombre entier compris entre 1 et N - 1.

5. Système de mesure LIDAR (10) selon l'une des revendications 1 à 4, **caractérisé en ce que** des éléments de détection (26) d'ordre impair voisins présentent un décalage et des éléments de détection (26) d'ordre pair voisins ne présentent aucun décalage.

6. Système de mesure LIDAR (10) selon l'une des revendications 1 à 5, **caractérisé en ce que** des éléments de détection (26) voisins par colonnes présentent un décalage ligne par ligne.

7. Système de mesure LIDAR (10) selon l'une des revendications 1 à 6, **caractérisé en ce que** des éléments de détection (26) voisins dans la direction des lignes présentent un décalage orienté dans la direction des colonnes.

8. Système de mesure LIDAR (10) selon l'une des revendications 1 à 7, **caractérisé en ce que** les colonnes d'éléments émetteurs (22) de l'unité d'émission LIDAR (14) et les colonnes d'éléments de détection (26) de l'unité de mesure LIDAR (12) sont parallèles entre elles ou forment un angle α entre elles.

9. Système de mesure LIDAR (10) selon la revendication 8, **caractérisé en ce que** l'angle α est compris entre 0° et 45°, de préférence entre 2° et 10°.
